(19)

Europäisches Patentamt
European Patent Office
Office européen des brevets

(11)  **EP 4 757 476 A1**

(12)  **EUROPEAN PATENT APPLICATION**
published in accordance with Art. 153(4) EPC

(43) Date of publication:
**10.06.2026  Bulletin 2026/24**

(21) Application number: **24852029.8**

(22) Date of filing: **12.06.2024**

(51) International Patent Classification (IPC):
*H04W 72/29* (2023.01)    *G06F 9/50* (2006.01)
*H04W 74/04* (2009.01)    *H04W 88/08* (2009.01)
*H04W 72/04* (2023.01)    *H04W 24/02* (2009.01)

(52) Cooperative Patent Classification (CPC):
G06F 9/50; H04W 24/02; H04W 72/04;
H04W 72/29; H04W 74/04; H04W 88/08

(86) International application number:
**PCT/KR2024/008099**

(87) International publication number:
**WO 2025/033672 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  07.08.2023  KR 20230103204
01.09.2023  KR 20230116564

(71) Applicant: **Samsung Electronics Co., Ltd.**
**Suwon-si, Gyeonggi-do 16677 (KR)**

(72) Inventors:
• **KO, Doohyun**
**Suwon-si Gyeonggi-do 16677 (KR)**
• **KIM, Wonkook**
**Suwon-si Gyeonggi-do 16677 (KR)**

• **PAIK, Sungchan**
**Suwon-si Gyeonggi-do 16677 (KR)**
• **YANG, Chilyoul**
**Suwon-si Gyeonggi-do 16677 (KR)**
• **RYU, Hankyu**
**Suwon-si Gyeonggi-do 16677 (KR)**
• **JUN, Jaechoon**
**Suwon-si Gyeonggi-do 16677 (KR)**
• **JUNG, Changho**
**Suwon-si Gyeonggi-do 16677 (KR)**
• **HA, Yoonjeong**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54)  **ELECTRONIC DEVICE, METHOD, AND STORAGE MEDIUM FOR ALLOCATING SYSTEM RESOURCE**

(57)     According to an embodiment, an electronic device for a distributed unit (DU) comprises: at least one processor; and a memory storing instructions. The instructions, when executed by the at least one processor, cause the electronic device to acquire a first message comprising information on a first central processing unit (CPU) resource amount from a first application for providing one or more physical (PHY) functions for at least one cell for the DU, and a second message comprising information on a second CPU resource amount from a second application for providing one or more medium access control (MAC) functions for the at least one cell. The instructions, when executed by the at least one processor, cause the electronic device to allocate a first part of a CPU resource pool, the first part corresponding to the first CPU resource amount, and a second part of the CPU resource pool, the second part corresponding to the second CPU resource amount.

DU (400)

| MODEM PROCESSING UNIT (410) | CONNECTION MANAGEMENT UNIT (420) | SYSTEM MANAGEMENT UNIT (430) |

FIG. 4

EP 4 757 476 A1

## Description

### [Technical Field]

The following descriptions relate to an electronic device, a method, and a storage medium for allocating system resource.

### [Background Art]

Network devices implemented in hardware may be configured to be virtualized so as to be installed, removed, and/or modified in a form of software on a server. An operator may more rapidly and flexibly manage a network through the virtualized network devices.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, an electronic device for a distributed unit (DU) may comprise at least one processor, and memory storing instructions. The instructions, when executed by the at least one processor, may cause the electronic device to obtain a first message including information on first amount of central processing unit (CPU) resource for one or more physical (PHY) functions for at least one cell related to the DU, from a first application for providing the one or more PHY functions and a second message including information on second amount of CPU resource for one or more medium access control (MAC) functions for the at least one cell, from a second application for providing the one or more MAC functions. The instructions, when executed by the at least one processor, may cause the electronic device to allocate, based on the first message and the second message, a first portion of a CPU resource pool corresponding to the first amount of CPU resource and a second portion of the CPU resource pool corresponding to the second amount of CPU resource. The first portion of the CPU resource pool may be used for performing the one or more PHY functions for the at least one cell. The second portion of the CPU resource pool may be used for performing the one or more MAC functions for the at least one cell.

According to an embodiment, a method performed by distributed unit (DU) may comprise obtaining a first message including information on first amount of central processing unit (CPU) resource for one or more physical (PHY) functions for at least one cell related to the DU, from a first application for providing the one or more PHY functions and a second message including information on second amount of CPU resource for one or more medium access control (MAC) functions for the at least one cell, from a second application for providing the one or more MAC functions. The method may comprise allocating, based on the first message and the second message, a first portion of a CPU resource pool corresponding to the first amount of CPU resource and a second portion of the CPU resource pool corresponding to the second amount of CPU resource. The first portion of the CPU resource pool may be used for performing the one or more PHY functions for the at least one cell. The second portion of the CPU resource pool may be used for performing the one or more MAC functions for the at least one cell.

According to an embodiment, a non-transitory computer readable storage medium may store one or more programs. The one or more programs may comprise instructions, which, when being executed by at least one processor of an electronic device for a distributed unit (DU) , cause the electronic device to obtain a first message including information on first amount of central processing unit (CPU) resource for one or more physical (PHY) functions for at least one cell related to the DU, from a first application for providing the one or more PHY functions and a second message including information on second amount of CPU resource for one or more medium access control (MAC) functions for the at least one cell, from a second application for providing the one or more MAC functions. The one or more programs may comprise instructions, which, when being executed by the at least one processor of the electronic device, cause the electronic device to allocate, based on the first message and the second message, a first portion of a CPU resource pool corresponding to the first amount of CPU resource and a second portion of the CPU resource pool corresponding to the second amount of CPU resource. The first portion of the CPU resource pool may be used for performing the one or more PHY functions for the at least one cell. The second portion of the CPU resource pool may be used for performing the one or more MAC functions for the at least one cell.

**[Description of the Drawings]**

FIG. 1 illustrates a wireless communication system according to an embodiment.

FIG. 2 illustrates an example of a structure for managing one or more cells according to an embodiment.

FIG. 3A illustrates an example of a configuration and an operation of a distributed unit (DU) for configuring a cell according to an embodiment.

FIG. 3B illustrates an example of a configuration and an operation of a DU for configuring a cell according to an embodiment.

FIG. 4 illustrates an example of a configuration of a virtualized DU according to an embodiment.

FIG. 5 illustrates an example of an operation performed in a modem processing unit of a DU according to an embodiment.

FIG. 6 illustrates an example of an operation performed in a modem processing unit for cell setup according to an embodiment.

FIG. 7A illustrates an example in which a central processing unit (CPU) resource pool is used according to an embodiment.

FIG. 7B illustrates an example in which a CPU resource pool is used according to an embodiment.

FIG. 8A is a diagram illustrating the number of CPU cores allocated according to the number of cells according to an embodiment.

FIG. 8B is a diagram illustrating the number of CPU cores allocated according to the number of cells according to an embodiment.

FIG. 8C is a diagram illustrating the number of CPU cores allocated according to the number of cells according to an embodiment.

FIG. 9 illustrates a flowchart related to an operation of an electronic device for a DU according to an embodiment.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., signal, information, symbol, message, signaling, reference signal (RS), data), terms referring to a resource (e.g., symbol, slot, subframe, radio frame, subcarrier, resource element (RE), resource block (RB), bandwidth part (BWP), occasion, system resource, central processing unit (CPU) resource), terms for an operational state (e.g., step, operation, procedure), terms referring to data (e.g., packet, user stream, information, bit, symbol, codeword), terms referring to a channel, terms referring to entities (e.g., node, point, server, component), and terms referring to a component of a device, which are used in the following description, are exemplified for convenience of explanation. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to' may be replaced with 'greater than', a condition described as 'less than or equal to' may be replaced with 'less than', and a condition described as 'greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generatizon Partnership Project (3GPP), extensible radio access network (xRAN), open-radio access network (O-RAN)), these are only examples for explanation. The various embodiments of the present disclosure may be easily modified and applied to other communication systems.

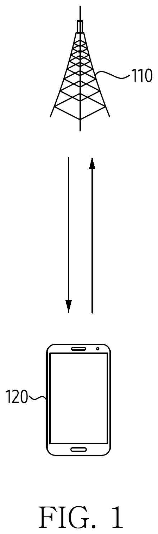

FIG. 1 illustrates a wireless communication system according to an embodiment.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

According to an embodiment, the base station 110 of FIG. 1 may configure at least one cell (cell). Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. As such, the base station 110 may be configured with one or more network elements (NEs). In addition to a DU and an RU, according to a protocol stack, the base station may be implemented in a distributed deployment in accordance with a centralized unit (CU) configured to perform a function of upper layers (e.g., packet data convergence protocol (PDCP), radio resource control (RRC)) and a distributed unit (DU) configured to perform a function of lower layers. As an example, NEs configuring the base station may include a central unit (CU), a distributed unit (DU), and/or a radio unit (RU). For example, the CU may be connected to one or more DUs to be responsible for functions of layers higher than the DU. For example, the CU may be responsible for functions of a radio resource control (RRC) layer and a packet data convergence protocol (PDCP) layer, and the DU and the RU may be responsible for functions of lower layers. The DU may perform a radio link control (RLC), a media access control (MAC), and some functions (high PHY) of a physical (PHY) layer, and the RU may be responsible for remaining functions (low PHY) of the PHY layer.

In addition to nodes configuring an access network, functional entities for a core network may also be referred to as NEs. For example, one or more NEs for a 5th generation core network (5GC) may include a user plane function (UPF), a session management function (SMF), an access and mobility management function (AMF), a user data management (UDM), a policy control function (PCF), an authentication server function (AUSF), and/or an authentication, authorization and accounting (AAA). For example, one or more NEs for an evolved packet core network (EPC) may include a mobility management entity (MME), a serving-gateway (S-GW), a packet-gateway (P-GW), a policy charging rules function (PCRF), and/or a home subscriber server (HSS).

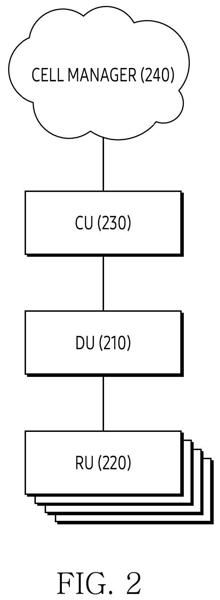

FIG. 2 illustrates an example of a structure for managing one or more cells according to an embodiment.

Referring to FIG. 2, a DU 210, an RU 220, a CU 230, and a cell manager 240 may be configured to manage one or more cells. This is merely for convenience of description, and the present disclosure is not limited thereto. In other words, an embodiment of the present disclosure may also be applied to a fronthaul structure between one DU and a plurality of RUs. For example, an embodiment of the present disclosure may be applied to a fronthaul structure between one DU and two RUs. In addition, an embodiment of the present disclosure may also be applied to a fronthaul structure between one DU and three RUs.

For example, the DU 210 and the RU 220 may be included in a base station 110. A fronthaul between the DU 210 and the RU 220 may be operated through an Fx interface. For operating the fronthaul, for example, interfaces such as enhanced common public radio interface (eCPRI) and radio over ethernet (ROE) may be used.

As communication technology develops, mobile data traffic increases, and accordingly, a bandwidth requirement required in a fronthaul between a digital unit and a radio unit has greatly increased. In a deployment such as a centralized/cloud radio access network (C-RAN), the DU 210 may be implemented to perform functions for packet data convergence protocol (PDCP), radio link control (RLC), media access control (MAC), and physical (PHY), and the RU may be implemented to further perform functions for a PHY layer in addition to a radio frequency (RF) function.

The DU 210 may be responsible for upper layer functions of a wireless network. For example, the DU 210 may perform functions of a MAC layer and a portion of a PHY layer. Herein, the portion of the PHY layer refers to functions among functions of the PHY layer that are performed at a higher stage, and may include, as an example, channel encoding (or channel decoding), scrambling (or descrambling), modulation (or demodulation), and layer mapping (or layer demapping). According to an embodiment, in a case that the DU 210 follows an O-RAN specification, the DU 210 may be referred to as an O-RAN DU (O-DU). The DU 210 may be replaced and expressed as a first network entity for a base station (e.g., gNB) in embodiments of the present disclosure, as necessary.

The RU 220 may be responsible for lower layer functions of a wireless network. For example, the RU 220 may perform a portion of a PHY layer and a RF function. Herein, the portion of the PHY layer refers to functions among functions of the PHY layer that are performed at a relatively lower stage than the DU 210, and may include, as an example, iFFT transform (or FFT transform), CP insertion (CP removal), and digital beamforming. The RU 220 may be referred to as an 'access unit (AU)', an 'access point (AP)', a 'transmission/reception point (TRP)', a 'remote radio head (RRH)', a 'radio unit (RU)', or another term having an equivalent technical meaning thereto. According to an embodiment, in a case that the RU 220 follows an O-RAN specification, the RU 220 may be referred to as an O-RAN RU (O-RU). The RU 220 may be replaced and expressed as a second network entity for a base station (e.g., gNB) in embodiments of the present disclosure, as necessary.

For example, the DU 210 and the RU 220 may configure one site. The DU 210 and the RU 220 may be configured in one site.

The CU 230 may be connected to one or more DUs (e.g., the DU 210) and may be responsible for a function of layers higher than the DU. For example, the CU 230 may be responsible for functions of a radio resource control (RRC) layer and a packet data convergence protocol (PDCP) layer, and the DU 210 and the RU 220 may be responsible for functions of lower layers. The DU 210 may perform some functions (high PHY) of a radio link control (RLC), a media access control (MAC), and a physical (PHY) layer, and the RU 220 may be responsible for remaining functions (low PHY) of the PHY layer.

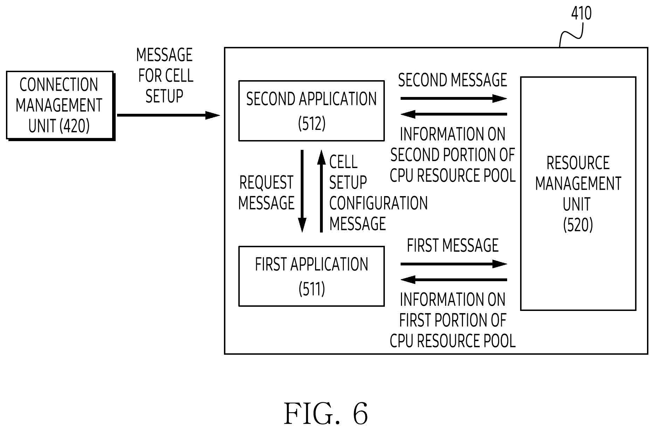

The cell manager 240 may register or manage the DU 210 and the RU 220. For example, based on an operation of the cell manager 240 being activated, at least one available DU and/or at least one available RU may be registered. Based on the at least one available DU and/or the at least one available RU being registered, the cell manager 240 may identify at least one available cell. The cell manager 240 may add a cell, based on at least one of frequency information (e.g., center frequency information), antenna information (e.g., the number of antennas), cell number information, and information regarding an RU to be added. For example, the cell manager 240 may transmit, to the CU 230, a message for cell setup. The CU 230 may transmit, to the DU 210, a message for cell setup based on the received message. Specific operations for performing cell setup in the DU 210 will be described in FIG. 6. The cell manager 240 may be referred to as a unified system manager (USM) in terms of managing a system including one or more cells provided from the DU 210.

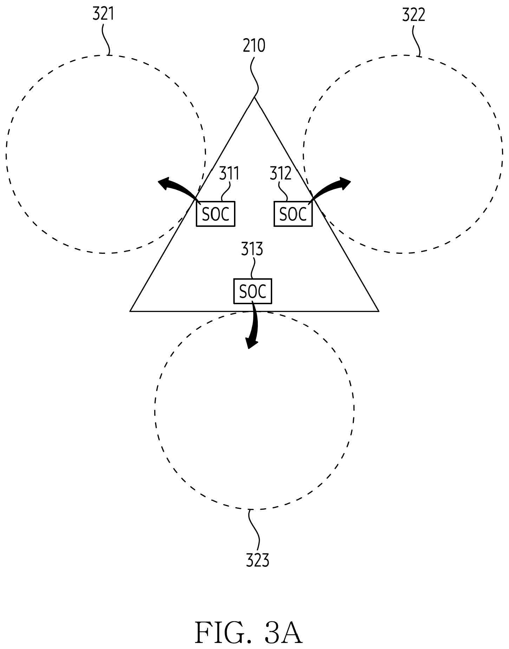

FIG. 3A illustrates an example of a configuration and an operation of a distributed unit (DU) for configuring a cell according to an embodiment.

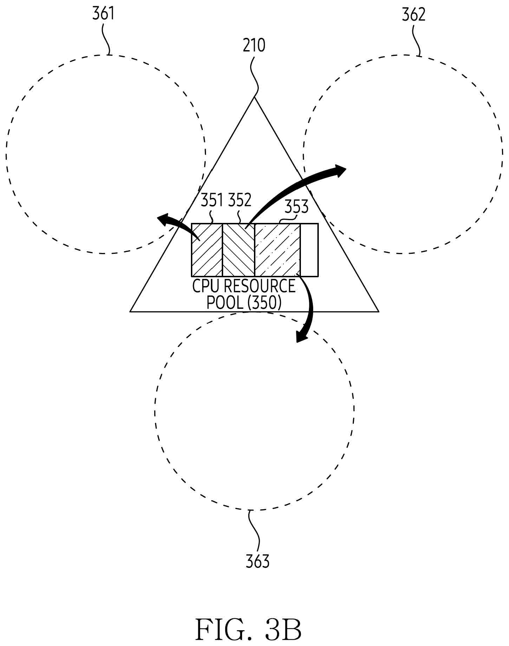

FIG. 3B illustrates an example of a configuration and an operation of a DU for configuring a cell according to an embodiment.

Referring to FIG. 3A, a DU 210 may include chips configured based on a system on chip (SoC). For example, the DU 210 may include a first chip 311, a second chip 312, and a third chip 313. Hereinafter, an example in which the DU 210 provides three cells is described in the present disclosure, but embodiments of the present disclosure are not limited thereto.

The DU 210 may configure a first cell 321. The DU 210 may configure the first cell 321 through the first chip 311. The first chip 311 may be configured to perform functions and processing related to a protocol stack for the first cell 321. Although not illustrated, the DU 210 may control an RU for configuring the first cell 321 through the first chip 311. The DU 210 may configure the first cell 321 based on controlling, through the first chip 311, the RU for configuring the first cell 321.

The DU 210 may configure a second cell 322. The DU 210 may configure the second cell 322 through the second chip 312. The second chip 312 may be configured to perform functions and processing related to a protocol stack for the second cell 322. Although not illustrated, the DU 210 may control an RU for configuring the second cell 322 through the second chip 312. The DU 210 may configure the second cell 322 based on controlling, through the second chip 312, the RU for configuring the second cell 322.

The DU 210 may configure a third cell 323. The DU 210 may configure the third cell 323 through the third chip 313. The third chip 313 may be configured to perform functions and processing related to a protocol stack for the third cell 323. Although not illustrated, the DU 210 may control an RU for configuring the third cell 323 through the third chip 313. The DU 210 may configure the third cell 323 based on controlling, through the third chip 313, the RU for configuring the third cell 323.

As described above, the DU 210 may configure one cell through one physically configured chip. In a case that one cell is configured through one physically configured chip, load balancing between each cell cannot be performed. For example, in a case that user equipments (UEs) in the first cell 321 exceed a designated number, the DU 210 may not be able to distribute a load.

Referring to FIG. 3B, the DU 210 may be virtualized. For example, the DU 210 may be referred to as a virtualized DU (vDU). The DU 210 may be implemented as software in an electronic device (e.g., server), instead of being implemented through physical hardware. As functions related to the DU 210 are implemented as software in the electronic device, the processing functions may be performed in the electronic device instead of being performed on a hardware unit basis. In order to execute the processing functions, a plurality of CPU resources may be required. Hereinafter, CPU resources of the processing functions for the DU 210 may be referred to as a CPU resource pool 350. The CPU resource pool 350 may be configured for the DU 210. The DU 210 may configure one or more cells by using the CPU resource pool 350. For example, the DU 210 may configure a first cell 361, a second cell 362, and a third cell 363 through the CPU resource pool 350.

The DU 210 may configure the first cell 361. The DU 210 may configure the first cell 361 by using a first portion 351 of the CPU resource pool 350. The first portion 351 of the CPU resource pool 350 may be configured to perform functions and processing related to a protocol stack for the first cell 361. Although not illustrated, the DU 210 may control an RU for configuring the cell 361 through the first portion 351 of the CPU resource pool 350. The DU 210 may configure the cell 361 based on controlling, through the first portion 351 of the CPU resource pool 350, the RU for configuring the first cell 361.

The DU 210 may configure the second cell 362. The DU 210 may configure the second cell 362 by using a second portion 352 of the CPU resource pool 350. The second portion 352 of the CPU resource pool 350 may be configured to perform functions and processing related to a protocol stack for the second cell 362. Although not illustrated, the DU 210 may control an RU for configuring the second cell 362 through the second portion 352 of the CPU resource pool 350. The DU 210 may configure the second cell 362 based on controlling, through the second portion 352 of the CPU resource pool 350, the RU for configuring the second cell 362.

The DU 210 may configure the third cell 363. The DU 210 may configure the third cell 363 by using a third portion 353 of the CPU resource pool 350. The third portion 353 of the CPU resource pool 350 may be configured to perform functions and processing related to a protocol stack for the third cell 363. Although not illustrated, the DU 210 may control an RU for configuring the third cell 363 through the third portion 353 of the CPU resource pool 350. The DU 210 may configure the third cell 363 based on controlling, through the third portion 353 of the CPU resource pool 350, the RU for configuring the third cell 363.

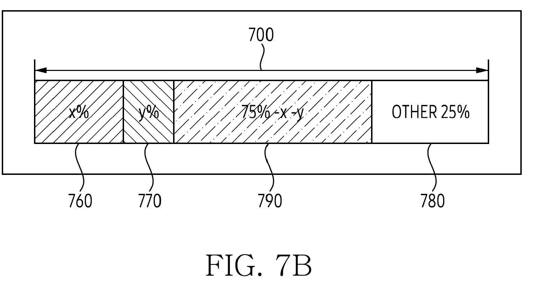

In a case that the CPU resource pool 350 is used to configure a cell, the DU 210 may divide and use the CPU resource pool 350 according to a load of the cell. In the present disclosure, allocating a portion of the CPU resource pool 350 to a processing function (e.g., one or more PHY functions or one or more MAC functions) may be referred to as CPU pooling. Since separate hardware is not configured to execute processing functions of the DU 210, but CPU resources are consumed, the DU 210 may perform CPU pooling for adaptive CPU resource allocation. Hereinafter, in the specification, a technical feature for allocating resources for configuring a cell within a CPU resource pool as illustrated in FIG. 7B will be described.

According to an embodiment, the above-described DU may be configured based on a virtualized network system (virtualized RAN (vRAN)). The vRAN may support predefined performance based on a fixed CPU resource (e.g., core) between frequency division duplex (FDD) and time division duplex (TDD). However, a system configuration (or flavor) supported by the vRAN may be variously configured based on a cell ratio between TDD and FDD and a bandwidth configuration of cells related to TDD and FDD. Accordingly, various system configurations (or flavors) configured based on the cell ratio between TDD and FDD and the bandwidth configuration of cells related to TDD and FDD may be implemented. In this case, operational complexity may increase. As operational complexity increases, there is an issue that may cause operator errors (i.e., human error). In addition, as the number of system configurations increases, development and verification procedures are required, and thus, a method for simplifying the same may be required. For example, an application included in a virtualized modem system may operate based on a data plane development kit (DPDK). Accordingly, since the allocated core is used regardless of an actual cell operation state, power efficiency may decrease.

According to an embodiment, a platform virtualized based on kubernetes may be configured. An application may perform high-performance processing through a resource (e.g., CPU core) allocated to a pod. The resource may be dynamically allocated. In this case, a resource may be allocated based on state information or service information between different devices, but according to the above-described embodiment, a resource between applications in the same device may not be allocated. For example, a method of allocating a resource between applications may be difficult to perform through a method of allocating a resource based on specific information. In other words, a method of allocating a resource between applications may be performed only in a specific metric and/or only in a specific service.

Hereinafter, in the specification, in order to effectively use a resource allocated in a virtualized radio access network (e.g., virtualized radio access network (vRAN)), a technical feature for dynamically allocating a CPU resource will be described. For example, a technical feature for dynamically allocating a resource between applications in a DU will be described.

For example, based on a virtualized DU, one or more PHY functions and one or more MAC functions may be performed through one or more applications for the DU. The one or more PHY functions may be performed through a first application. The one or more MAC functions may be performed through a second application. As an example, the one or more PHY functions may include functions performed in a PHY layer. The one or more MAC functions may include functions performed in a MAC layer.

For example, CPU resources (e.g., cores) may be dynamically allocated to a first application for providing one or more PHY functions and a second application for providing one or more MAC functions. Based on services provided by each application through a neutral resource manager (or an adaptive core allocation manager), a size of resources may be identified and resources may be allocated to each application. A resource allocated to each application may be distinguished from a radio resource. A resource allocated to each application may be a resource related to a core of a CPU for obtaining processing power.

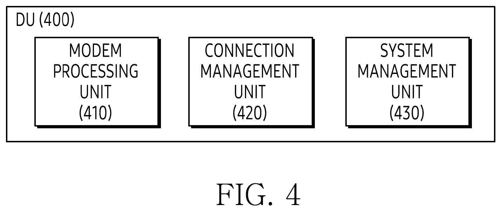

FIG. 4 illustrates an example of a configuration of a virtualized DU according to an embodiment. Hereinafter, a term such as "...unit" and '...device' used herein refer to a unit for processing at least one function or operation, and may be implemented as hardware, software, or a combination of hardware and software.

Referring to FIG. 4, a DU 400 may include at least one of a modem processing unit 410, a connection management unit 420, or a system management unit 430.

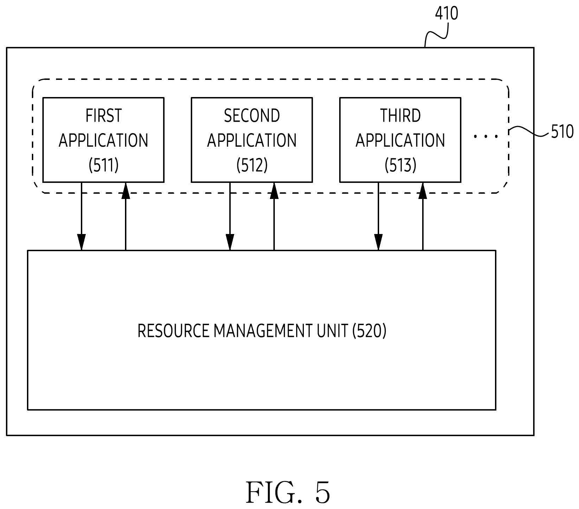

The modem processing unit 410 may provide one or more physical (PHY) functions and/or one or more medium access control (MAC) functions. A specific configuration and an operation of the modem processing unit 410 will be described in FIG. 5. The connection management unit 420 may be used to obtain information from another component distinguished from the DU 400 (e.g., the CU 230 or the RU 220 of FIG. 2) or provide the information. The connection management unit 420 may be used for call processing. The system management unit 430 may be used to perform at least one operation distinguished from operations of the modem processing unit 410 and the connection management unit 420.

According to an embodiment, the modem processing unit 410 may be configured based on DPDK. The connection management unit 420 and the system management unit 430 may be configured based on software (e.g., Linux) distinguished from DPDK.

According to an embodiment, the modem processing unit 410, the connection management unit 420, and/or the system management unit 430 may be configured based on a pod. For example, the pod may refer to a smallest deployable computing unit.

FIG. 5 illustrates an example of an operation performed in a modem processing unit of a DU according to an embodiment.

Referring to FIG. 5, a DU 400 may include a modem processing unit 410. The modem processing unit 410 may include a plurality of applications 510 and a resource management unit 520. For example, the plurality of applications 510 may process data based on CPU resources allocated respectively. The resource management unit 520 may allocate CPU resources to each of the plurality of applications 510. For example, the resource management unit 520 may be configured based on a pod within the DU 400. For example, the resource management unit 520 may be referred to as one of an adaptive core allocation manager (ACM), a resource management manager, and a CPU resource management unit.

The plurality of applications 510 may include a first application 511, a second application 512, and a third application 513. The first application 511 may be configured to provide one or more PHY functions. The second application 512 may be configured to provide one or more MAC functions. The third application 513 may be configured to provide functions distinguished from the one or more PHY functions and the one or more MAC functions.

According to an embodiment, the plurality of applications 510 and the resource management unit 520 may perform a request for CPU resources, allocation of CPU resources, and release of CPU resources, based on a designated application program interface (API).

The resource management unit 520 may be configured to allocate CPU resources to each of a plurality of applications. For example, the resource management unit 520 may obtain a first message including information on a first amount of CPU resource for one or more PHY functions from the first application 511. The resource management unit 520 may obtain the first message based on an inter-process communication (IPC) interface. For example, the resource management unit 520 may obtain a second message including information on a second amount of CPU resource for one or more MAC functions from the second application 512. The resource management unit 520 may obtain the second message based on the IPC interface. For example, the IPC interface may be configured based on a ring buffer. The ring buffer may provide a low-latency message queue for OPC.

Based on the first message and the second message, the resource management unit 520 may allocate a first portion of a CPU resource pool corresponding to the first amount of CPU resource and a second portion of the CPU resource pool corresponding to the second amount of CPU resource. The first portion of the CPU resource pool may be used for one or more PHY functions. The second portion of the CPU resource pool may be used for one or more MAC functions.

As described above, a CPU resource may be dynamically allocated based on a request of an application. The resource management unit 520 may perform allocation of CPU resource based on a request of CPU resource. Accordingly, rather than a resource being passively allocated based on requesting resource information between devices or load monitoring by an administrator, a resource required by each application may be allocated through the resource management unit 520.

FIG. 6 illustrates an example of an operation performed in a modem processing unit for cell setup according to an embodiment.

Referring to FIG. 6, a DU 400 may receive (or obtain) a message for cell setup from a CU (e.g., the CU 230 of FIG. 2). A connection management unit 420 of the DU 400 may transmit a message for cell setup to a modem processing unit 410. The modem processing unit 410 may obtain (or receive) the message for cell setup from the connection management unit 420. For example, the message for cell setup may include a message for adding (or configuring, expanding) at least one cell.

A second application 512 of the modem processing unit 410 may transmit (or provide), to a first application 511, a request message for performing an operation for cell setup based on the message for cell setup. The first application 511 may obtain (or receive) the request message for performing the operation for cell setup from the second application 512. The first application 511 may identify a first amount of CPU resource for performing one or more PHY functions based on the request message. For example, the first application 511 may identify, as a first number, the number of CPU cores for performing one or more PHY functions based on the request message.

For example, the first application 511 may identify the number of CPU cores for performing one or more PHY functions (or the first number), based on at least one of information on a communication mode for at least one cell, radio resource information for at least one cell, and/or user information. The first application 511 may identify the number of CPU cores for performing one or more PHY functions (or the first number), based on Equation 1.

[Equation 1]

$$A = f(layer, RB, UEs)$$

Referring to Equation 1, "A' is the number of CPU cores for performing one or more PHY functions (or the first number). 'f(x)' is a function for identifying the number of CPU cores for performing one or more PHY functions in the first application 511. 'layer' is the number of layers set within at least one cell (e.g., layers based on multiple-input and multiple-output (MIMO)). 'RB' is the number of resource blocks related to at least one cell. 'UEs' is the number of UEs related to at least one cell.

According to an embodiment, the first application 511 may transmit a cell setup configuration message to the second application 512. For example, the cell setup configuration message may include at least one of information on a communication mode for at least one cell, radio resource information, and/or user information. The cell setup configuration message may include at least one of information on the number of layers set within at least one cell, information on the number of resource blocks related to at least one cell, and information on the number of UEs related to at least one cell.

The second application 512 may obtain (or receive) a cell setup configuration message from the first application 511. The second application 512 may identify a second amount of CPU resource for performing one or more MAC functions, based on the cell setup configuration message. For example, the second application 512 may identify, as a second number, the number of CPU cores for performing one or more MAC functions based on the cell setup configuration message.

For example, the second application 512 may identify the number of CPU cores for performing one or more MAC functions (or the second number), based on at least one of information on a communication mode for at least one cell, radio resource information for at least one cell, and/or user information. The second application 512 may identify the number of CPU cores for performing one or more MAC functions (or the second number), based on Equation 2.

[Equation 2]

$$B = f'(layer, RB, UEs)$$

Referring to Equation 2, 'B' is the number of CPU cores for performing one or more MAC functions (or the second number). 'f'(x)' is a function for identifying the number of CPU cores for performing one or more MAC functions in the second application 512. According to an embodiment, 'f'(x)' may be distinguished from 'f(x)' of Equation 1. 'layer' is the number of layers set within at least one cell. 'RB' is the number of resource blocks related to at least one cell. 'UEs' is the number of UEs related to at least one cell.

According to an embodiment, the first application 511 may transmit, to the resource management unit 520, a first message including information on a first amount of CPU resource for one or more PHY functions (e.g., information on a first number of cores). The second application 512 may transmit, to the resource management unit 520, a second message including information on a second amount of CPU resource for one or more MAC functions (e.g., information on a second number of cores).

The resource management unit 520 may obtain the first message and the second message. For example, the resource management unit 520 may obtain the first message from the first application 511. The resource management unit 520 may obtain the second message from the second application 512.

The resource management unit 520 may allocate, based on the first message and the second message, a first portion of a CPU resource pool corresponding to the first amount of CPU resource and a second portion of the CPU resource pool corresponding to the second amount of CPU resource. For example, the resource management unit 520 may allocate, based on the first message, the first portion of the CPU resource pool corresponding to the first amount of CPU resource. The resource management unit 520 may allocate, based on the second message, the second portion of the CPU resource pool corresponding to the second amount of CPU resource.

The first application 511 may perform one or more PHY functions by using the first portion of the CPU resource pool. The second application 512 may perform one or more MAC functions by using the second portion of the CPU resource pool.

Hereinafter, operations of applications (e.g., the first application 511 and the second application 512) and the resource management unit 520 will be described according to various cases (or situations). For example, the DU 400 may set requirements of applications of the DU 400 and the resource management unit 520 according to various cases (or situations).

According to an embodiment, requirements of applications and the resource management unit 520 may be set as shown in Tables 1 to 11.

[Table 1]

| Number | Use-case | Requirement |
|---|---|---|
| 1 | An application (App) performs an initialization operation through the resource management unit. | - Applications may operate after being allocated a resource from the resource management unit.<br>- Applications may be allocated a resource after the resource management unit is in a ready state.<br>- An application should proceed with a registration procedure with the resource management unit with an App ID.<br>- The resource management unit should be able to distinguish an application based on an App ID.<br>- The resource management unit may allocate a resource only to a registered application. |

Referring to Table 1, an application may perform an initialization operation through the resource management unit 520. For example, the application may operate after being allocated a resource (or CPU resource) from the resource management unit 520. For example, the application may be allocated a resource after the resource management unit 520 is in a ready state. For example, an App ID may be set for each application. The application may perform a registration procedure with the resource management unit 520 through the App ID. For example, the resource management unit 520 may distinguish the application based on the App ID. The resource management unit 520 may allocate a CPU resource only to a registered application.

[Table 2]

| Number | Use-case | Requirement |
|---|---|---|
| 2 | An application (App) is allocated a core through the resource management unit. | - App and the resource management unit should comply with a core allocation method below.<br>> Request: the required number of cores<br><br><br>> Assign: the allocated number of cores and a core ID (number)<br>- The resource management unit and App should be able to know a sibling pair relationship for each core ID. |

(continued)

| Number | Use-case | Requirement |
|---|---|---|
| | | - The resource management unit should allocate cores in consideration of an available sibling pair during core allocation. ※ |
| | | - In a case that an App needs to be allocated a sibling core, the App should be able to explicitly request the sibling core. |
| | | - In a case that the resource management unit receives an explicit request for allocation of a sibling core, the resource management unit should allocate the sibling core, and should be able to process a failure in a case that allocation is not possible. In a case of a CPU architecture without an HT function, since there is no sibling attribute, there is no failure processing case. |
| | | - In a case that an App is not allocated a resource, the App should be able to process a failure. |
| | | > Cell Setup Failure processing (Day-1) |
| | | > Feature On/Off (Day-2 ~ ) |

Referring to Table 2, an application may be allocated a core (or CPU core) through the resource management unit 520. For example, the application may provide, to the resource management unit 520, information on a required number of cores. The resource management unit 520 may provide, to the application, information on the number of allocated cores and information on a core ID, based on the information on the required number of cores obtained from the application. For example, the resource management unit 520 and the application may know a sibling pair according to a core ID. For example, in a case that a hyper threading (HT) function is applied, two virtual cores corresponding to one physical core may operate. For one physical core, two core IDs may be logically allocated. The two core IDs may be configured as a sibling pair. The resource management unit 520 may allocate a core to the application, based on the sibling pair. For example, the application may request the resource management unit 520 to be allocated cores configured as a sibling pair (or sibling cores). In a case that allocation of sibling cores is requested, the resource management unit 520 may allocate the sibling cores to the application. In a case that the sibling cores are not allocated, resource allocation may be identified (or determined) as a failure. In a case that the application is not allocated a resource, the application may identify (or determine) the resource allocation as a failure. For example, in a case that cores configured as a sibling pair are not allocated together, inefficiency of CPU resource use may occur. Accordingly, the resource management unit 520 may allocate sibling cores to the application.

[Table 3]

| Number | Use-case | Requirement |
|---|---|---|
| 3 | An application returns a Core through the resource management unit. | - App and the resource management unit should comply with a core return method below.<br>> Return: the number of cores to be returned and a core id (number)<br><br>- An App should stop use of a return target core and return it to the resource management unit.<br><br>- App should return a core in consideration of a possible sibling pair during core return.<br><br>- The resource management unit should register a returned core again to an available pool.<br><br>- The resource management unit should check a returned core and should be able to process as false in a case of a mismatch.<br>> Refer to a use-case of number 4<br><br>- In a case that an App receives false, the App should be able to process an error based on information obtained from the resource management unit.<br>> Refer to a use-case of number 4 |

Referring to Table 3, an application may return a core through the resource management unit 520. For example, the application may provide, to the resource management unit 520, information on the number of cores to be returned and information on a core ID. For example, the application may stop use of a core to be returned and return the core to be returned to the resource management unit 520. For example, the application may return a core based on a sibling pair. The application may return cores that are a sibling pair together. For example, the resource management unit 520 may register a returned core in an available pool (or a CPU resource pool). The resource management unit 520 may identify a returned core, and in a case that a mismatch occurs with respect to the returned core, may identify (or determine) that the return has failed. For example, the application may identify (or determine) that an error has occurred through information obtained from the resource management unit 520, based on the return being identified as failed by the resource management unit 520.

[Table 4]

| Number | Use-case | Requirement |
|---|---|---|
| 4 | An application (App) checks consistency of a Core map mutually known through the resource management unit. *The Core map indicates a mapping relationship between an App and a core. | - An App should be able to query, on demand, a Core map allocated to the App from the resource management unit.<br><br>- The resource management unit should be able to manage a Core map for each App.<br><br>- In a case that a Core map is mismatched with the resource management unit, the App should be able to be synchronized with the resource management unit.<br><br>> Synchronization through a re-initialization operation<br><br>> Synchronize only a Core map<br><br>- App should be able to query, as needed, an entire Core map managed by the resource management unit from the resource management unit. |

Referring to Table 4, an application may identify whether a core map identified in the application is identical to a core map set in the resource management unit 520. For example, the application may identify, through the resource management unit 520, a core map allocated to the application. For example, the resource management unit 520 may manage a core map for each application. For example, the application may identify that a core map identified in the application (hereinafter, a first core map) has a mismatch with a core map set in the resource management unit 520 (hereinafter, a second core map). The application may synchronize core maps based on a mismatch between the first core map and the second core map. As an example, the application may synchronize core maps based on an initialization operation (or a re-initialization operation). As an example, the application may synchronize only core maps. For example, the application may identify an entire core map managed in the resource management unit 520.

[Table 5]

| Number | Use-case | Requirement |
|---|---|---|
| 5 | An application releases all Core resources through the resource management unit before termination. | - An App should stop use of all cores and return it to the resource management unit.<br>- The resource management unit should register a returned core again to an available Pool. |

Referring to Table 5, an application may release all Core resources allocated through the resource management unit 520, before the application is terminated. For example, the application may stop use of all allocated cores and return the allocated cores to the resource management unit 520. For example, the resource management unit 520 may register the returned cores in an available pool (or CPU resource pool).

[Table 6]

| Number | Use-case | Requirement |
|---|---|---|
| 6 | An application may be terminated. | - An App should release all resources. |

Referring to Table 6, an application may be terminated. For example, in a case that the application is terminated, the application may release all allocated resources.

[Table 7]

| Number | Use-case | Requirement |
|---|---|---|
| 7 | An application may be abnormally terminated. | - An App should follow a reset sequence after abnormal termination.<br>> Refer to a use-case of number 8 |

Referring to Table 7, an application may be abnormally terminated. For example, based on the application being abnormally terminated, a reset procedure may be performed based on a reset sequence.

[Table 8]

| Number | Use-case | Requirement |
|---|---|---|
| 8 | An application performs a re-initialization (or initialization) operation through the resource management unit at a reset moment. | - Apps should perform an Initialization Sequence.<br>- An App should perform consistency checking of a Core map and a synchronization procedure with the resource management unit based on the App, after a registration procedure. |

Referring to Table 8, an application may perform an initialization procedure (or re-initialization procedure) based on a reset procedure. For example, applications may perform an initialization procedure based on an initialization sequence. For example, after a registration procedure, the application may check consistency of a Core map (or synchronization of a Core map) and perform a synchronization procedure regarding operations of the resource management unit 520 and the application.

[Table 9]

| Number | Use-case | Requirement |
|---|---|---|
| 9 | An application may send a request to the resource management unit and process the request without a problem even at a moment that another application is already using the resource management unit. | - The resource management unit should be able to sequentially process App requests without omission.<br>- App should be able to receive a response of the resource management unit.<br>- App should be able to re-request a message in a case that message omission occurs. |

Referring to Table 9, an application may transmit, to the resource management unit 520, a request message for an operation (e.g., resource allocation) even in a case that the resource management unit 520 is being used by another application. For example, the resource management unit 520 may sequentially perform processing for a request, based on a request message received from the application. The application may receive a response message to the resource management unit 520. For example, in a case that omission of a message (e.g., response message) occurs, the application may request (or re-request) the message to the resource management unit 520.

[Table 10]

| Number | Use-case | Requirement |
|---|---|---|
| 10 | The resource management unit may be terminated. | - The resource management unit initializes all cores. |

Referring to Table 10, the resource management unit 520 may be terminated. For example, the resource management unit 520 may initialize all cores based on termination of the resource management unit 520.

[Table 11]

| Number | Use-case | Requirement |
|---|---|---|
| 11 | The resource management unit may be abnormally terminated. | - The resource management unit should be able to back up Core map data and should be able to restore the Core map when re-starting. |

Referring to Table 11, the resource management unit 520 may be abnormally terminated. For example, in a case that the resource management unit 520 is abnormally terminated, the resource management unit 520 may back up data on a Core map. The resource management unit 520 may restore the Core map when re-starting.

The requirements of applications and the resource management unit 520 described in Tables 1 to 11 above may be configured to efficiently manage CPU resources. For example, the above-described requirements may be configured to detect an error of CPU resource allocation and perform processes for resolving an occurred error.

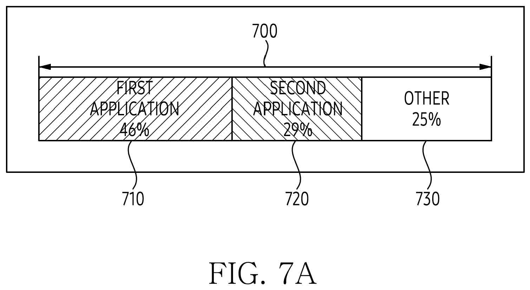

FIG. 7A illustrates an example in which a central processing unit (CPU) resource pool is used according to an embodiment.

FIG. 7B illustrates an example in which a CPU resource pool is used according to an embodiment.

Referring to FIG. 7A, in the DU 400, all available CPU resource pool 700 may be used regardless of a capacity of a cell. For example, in a case that a cell is expanded, core resources may be identified and allocated based on a maximum capacity. Accordingly, all available CPU resources may be used regardless of an actually serviceable expanded cell capacity.

For example, a first portion 710 of the CPU resource pool 700 may be allocated for a first application. A second portion 720 of the CPU resource pool 700 may be allocated for a second application. A third portion 730 of the CPU resource pool 700 may be allocated for a third application distinguished from the first application and the second application. The first portion 710, the second portion 720, and the third portion 730 of the CPU resource pool 700 may configure all of the CPU resource pool 700. The first portion 710, the second portion 720, and the third portion 730 of the CPU resource pool 700 may be configured based on a maximum capacity required by each of applications. As an example, the first portion 710 may be set to be larger than the second portion 720. Even in a case that throughput of the second application is greater than throughput of the first application, the first portion 710, the second portion 720, and the third portion 730 of the CPU resource pool 700 may be maintained. In this case, CPU resources may be used inefficiently.

As described above, in a case that all of the CPU resource pool 700 is used, since a development process is relatively simplified, a stable operation may be performed and stable performance may be provided. However, in a case that all of the CPU resource pool 700 is used, CPU resources may not be flexibly used. Also, inconvenience in system operation according to diversification of configurations (or flavors) may occur. Accordingly, for efficient use of CPU resources, CPU resources may be allocated as shown in FIG. 7B.

Referring to FIG. 7B, within the DU 400, a portion of the CPU resource pool 700 may be allocated according to an amount of a resource required in each of applications. For example, each application may provide, to the resource management unit 520, information on an amount of a required CPU resource. The resource management unit 520 may allocate CPU resources within the CPU resource pool 700, based on information on an amount of a required CPU resource obtained from each application. Unlike FIG. 7A, all of the CPU resource pool 700 is not used, and an amount of a CPU resource required in each application may be allocated.

For example, a first portion 760 of the CPU resource pool 700 may be allocated for a first application. A second portion 770 of the CPU resource pool 700 may be allocated for a second application. A third portion 780 of the CPU resource pool 700 may be allocated for a third application distinguished from the first application and the second application. A fourth portion 790 among the CPU resource pool 700 may not be used. According to an embodiment, the third portion 780 of the CPU resource pool 700 allocated for the third application may be fixedly allocated. CPU resources for the first application for one or more PHY functions and the second application for one or more MAC functions may be allocated within a remaining portion excluding the third portion 780 of the CPU resource pool 700.

As described above, in a case that the CPU resource pool 700 is flexibly used, a portion of CPU resources may not be used. For example, at least one core among a plurality of cores of a CPU of the DU 400 may not be used. The at least one core may be set to an idle state. As the at least one core is set to the idle state, power used in the DU 400 may be reduced. For example, power used in the DU 400 may be reduced by cutting off or limiting power of the at least one core. Also, in a case that the CPU resource pool 700 is flexibly used, the number of system configurations (or flavors) may be reduced, and operational convenience may be increased.

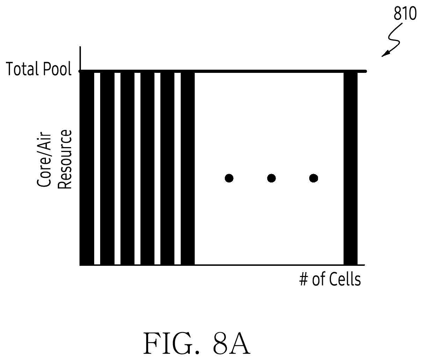

FIG. 8A is a diagram illustrating the number of CPU cores allocated according to the number of cells according to an embodiment.

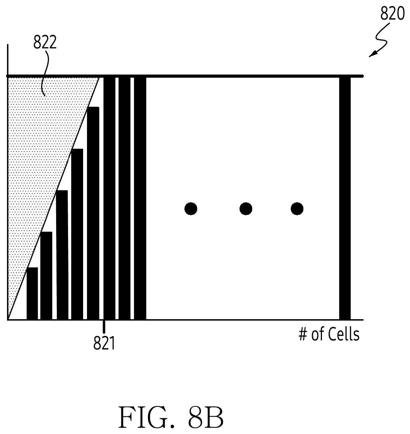

FIG. 8B is a diagram illustrating the number of CPU cores allocated according to the number of cells according to an embodiment.

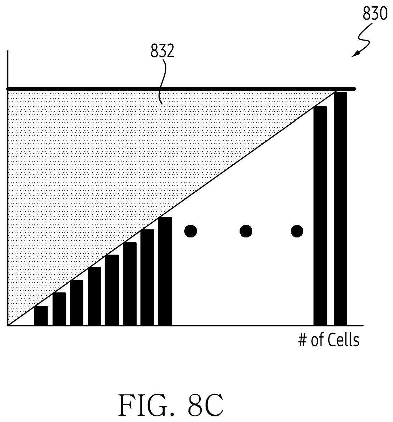

FIG. 8C is a diagram illustrating the number of CPU cores allocated according to the number of cells according to an embodiment.

Referring to FIG. 8A, a graph 810 illustrates an example in which an available CPU resource pool is entirely used within the DU 400 regardless of the number of cells. In the graph 810, even in a case that the number of cells is 1, the CPU resource pool may be entirely used. Accordingly, as the number of cells increases, allocated CPU resources may be maintained identically. For example, an operation of the DU 400 according to the graph 810 may be related to an operation of the DU 400 described in FIG. 7A.

Referring to FIGS. 8B and 8C, a graph 820 and a graph 830 illustrate an example in which a portion of a CPU resource pool is allocated within the DU 400 according to an amount of a resource required in each of applications.

For example, the DU 400 may allocate a resource required to provide maximum performance whenever a cell is expanded. The graph 820 illustrates an example in which a resource required to provide maximum performance is allocated whenever a cell is expanded.

For example, the DU 400 may allocate a resource based on an average traffic model of a cell whenever a cell is expanded. The graph 830 illustrates an example in which a resource is allocated based on an average traffic model of a cell whenever a cell is expanded.

Referring to FIG. 8B, a resource management unit 520 of the DU 400 may allocate a resource (e.g., CPU resource) so as to provide the same performance as in a case that a resource is fixedly allocated as shown in FIG. 8A. For example, the resource management unit 520 may allocate all resources required to provide maximum performance whenever a cell is expanded. According to expansion of a cell, the resource management unit 520 may allocate a resource for each cell until all resources included in a resource pool are allocated (or exhausted). In a case that all resources are allocated (or exhausted), a resource may be used for operation of each cell through a pooling procedure with cells to be expanded. For example, in a case that all resources included in the resource pool are allocated, the DU 400 may perform an operation for one or more cells in the same or similar manner as an operation performed in FIG. 8A. For example, in a case that all resources included in the resource pool are allocated, resources according to each cell may be allocated based on a maximum capacity required in each cell.

For example, the resource management unit 520 may increase a size of a resource allocated for cells related to the DU 400 as the number of cells related to the DU 400 increases while the number of cells related to the DU 400 is less than or equal to a designated number 821. The resource management unit 520 may allocate all resources included in a resource pool based on the number of cells related to the DU 400 being the designated number 821. The resource management unit 520 may maintain a state in which all resources included in the resource pool are allocated, based on the number of cells related to the DU 400 being greater than the designated number 821. While the number of cells related to the DU 400 is less than or equal to the designated number 821, in a case that the size of a resource allocated for cells related to the DU 400 increases as the number of cells related to the DU 400 increases, there is an effect that power for a resource corresponding to a region 822 may be reduced.

Referring to FIG. 8C, the resource management unit 520 of the DU 400 may allocate a resource (e.g., CPU resource) based on power saving. For example, when a cell is expanded, three sectors may be configured per carrier component. The DU 400 may allocate a resource based on an average traffic model for all expandable cells. Through the resource management unit 520, the DU 400 may allocate resources only enough to provide performance for the average traffic model. Accordingly, resource efficiency may be improved, and a power saving effect may be improved.

For example, the resource management unit 520 may increase a size of a resource allocated for cells related to the DU 400 as the number of cells related to the DU 400 increases. The DU 400 (or each application) may increase a size of a resource based on an average traffic model for all expandable cells. According to an embodiment, in a case that three sectors are configured per carrier component, the resource management unit 520 may increase a size of an allocated resource by a size of 1/3 (one over three) of a size of a resource that is increased as the number of cells increases in FIG. 8B. According to an embodiment, the resource management unit 520 may increase a size of an allocated resource as the number of cells related to the DU 400 increases up to a maximum number of cells processable in the DU 400. For example, in a case that a size of a resource allocated for cells related to the DU 400 increases as the number of cells related to the DU 400 increases, there is an effect that power for a resource corresponding to a region 832 may be reduced.

In a case that a resource is allocated as shown in FIG. 8B, while the same or similar performance as in a case that a resource is allocated as shown in FIG. 8A may be provided, a resource of a resource pool may be allocated more quickly than the operation of FIG. 8C, and thus a power saving effect may be low.

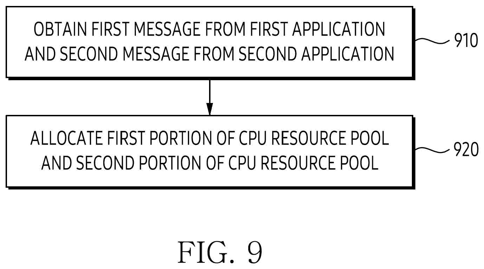

FIG. 9 illustrates a flowchart related to an operation of an electronic device for a DU according to an embodiment.

In the following embodiment, each operation may be performed sequentially, but is not necessarily performed sequentially. For example, the sequence of each operation may be changed, and at least two operations may be performed in parallel. An electronic device described below may be configured for the above-described DU 400 (or the resource management unit 520 of the DU 400). For example, the electronic device may be configured to perform operations of the DU 400 (or the resource management unit 520 of the DU 400). Operations 910 and 920 of FIG. 9 may be performed in an electronic device for the DU 400 (or the resource management unit 520 of the DU 400). Hereinafter, for convenience of description, operations 910 and 920 of FIG. 9 may be described as being performed by the resource management unit 520 of the DU 400.

Referring to FIG. 9, in operation 910, the resource management unit 520 may obtain a first message from a first application and a second message from a second application. For example, the first message and the second message may be obtained based on an inter-process communication IPC) interface.

For example, the first application may provide one or more PHY functions for at least one cell related to the DU 400. The first application may transmit, to the resource management unit 520, the first message including information on a first amount of CPU resource for one or more PHY functions for at least one cell. The resource management unit 520 may obtain the first message from the first application.

For example, the second application may provide one or more MAC functions for at least one cell related to the DU 400. The second application may transmit, to the resource management unit 520, a second message including information on a second amount of CPU resource for one or more MAC functions for at least one cell. The resource management unit 520 may obtain the second message from the second application.

According to an embodiment, the second application may obtain a message for cell setup from the connection management unit 420 of the DU 400. The second application may transmit (or provide), to the first application, a request message for performing an operation for cell setup based on the message for cell setup.

For example, the first application may obtain (or receive), from the second application, a request message for performing an operation for cell setup. The first application may identify a first amount of CPU resource for performing one or more PHY functions based on the request message. For example, the first application may identify, as a first number, the number of CPU cores for performing one or more PHY functions based on the request message.

The first application may identify, as the first number, the number of CPU cores for performing one or more PHY functions, based on at least one of information on a communication mode for at least one cell, radio resource information for at least one cell, and/or user information.

As an example, the information on a communication mode for at least one cell may include information set for communication within at least one cell. The information set for communication within at least one cell may include at least one of the number of layers (e.g., layers based on MIMO), the number of antennas, whether to operate in an FDD mode, whether to operate in a TDD mode, or channel state information. As an example, the radio resource information for at least one cell may include at least one of the number of RBs, the number of symbols, and the number of slots. As an example, the user information may include at least one of the number of UEs related to at least one cell, information on performance (e.g., reception performance) of UEs related to at least one cell, and information on a service provided within at least one cell.

The first application may transmit a cell setup configuration message to the second application. For example, the cell setup configuration message may include at least one of information on a communication mode for at least one cell, radio resource information, and/or user information. The cell setup configuration message may include at least one of information on the number of layers set within at least one cell, information on the number of resource blocks related to at least one cell, and information on the number of UEs related to at least one cell.

The second application may obtain (or receive), from the first application, a cell setup configuration message. The second application may identify a second amount of CPU resource for performing one or more MAC functions, based on the cell setup configuration message. For example, the second application may identify, as a second number, the number of CPU cores for performing one or more MAC functions based on the cell setup configuration message.

According to an embodiment, the resource management unit 520 may obtain, from the first application, a first message including information on a first amount of CPU resource. The resource management unit 520 may obtain, from the second application, a second message including information on a second amount of CPU resource. For example, the information on the first amount of CPU resource may include information on a first number of cores for performing one or more PHY functions from among a plurality of available cores for the DU 400. The information on the second amount of CPU resource may include information on a second number of cores for performing one or more MAC functions from among the plurality of available cores for the DU 400.

In operation 920, the resource management unit 520 may allocate a first portion of a CPU resource pool and a second portion of the CPU resource pool. For example, the resource management unit 520 may allocate, based on the first message and the second message, the first portion of the CPU resource pool corresponding to the first amount of CPU resource and the second portion of the CPU resource pool corresponding to the second amount of CPU resource.

According to an embodiment, the CPU resource pool may be set based on the number of a plurality of available cores for the DU 400. The resource management unit 520 may allocate a resource for each application within the CPU resource pool. The resource management unit 520 may allocate a resource within the CPU resource pool, based on allocating a portion of the plurality of cores to each application.

For example, the resource management unit 520 may allocate the first portion of the CPU resource pool corresponding to the first amount of CPU resource. The resource management unit 520 may allocate, for a first application, the first portion of the CPU resource pool. The first portion of the CPU resource pool may be allocated based on the first number of cores. As an example, the resource management unit 520 may allocate, for the first application, the first number of cores. The first portion of the CPU resource pool may be used to perform one or more PHY functions for at least one cell.

For example, the resource management unit 520 may allocate the second portion of the CPU resource pool corresponding to the second amount of CPU resource. The resource management unit 520 may allocate, for a second application, the second portion of the CPU resource pool. The second portion of the CPU resource pool may be allocated based on the second number of cores. As an example, the resource management unit 520 may allocate, for the second application, the second number of cores. The second portion of the CPU resource pool may be used to perform one or more MAC functions for at least one cell.

According to an embodiment, sizes of the first portion and the second portion of the CPU resource pool may be identified based on the number of at least one cell. For example, the resource management unit 520 (or the DU 400) may identify sizes of the first portion and the second portion of the CPU resource pool, based on the number of at least one cell. For example, the first application may identify information on the first number of cores, based on the number of at least one cell. The resource management unit 520 may identify the first portion of the CPU resource pool, based on the information on the first number of cores. For example, the second application may identify information on the second number of cores, based on the number of at least one cell. The resource management unit 520 may identify the second portion of the CPU resource pool, based on the information on the second number of cores.

For example, based on the number of at least one cell being greater than or equal to a designated number, all of the CPU resource pool may be allocated. The resource management unit 520 (or the DU 400) may allocate all of the CPU resource pool, based on the number of at least one cell being greater than or equal to the designated number. While the number of cells related to the DU 400 is less than or equal to the designated number, the resource management unit 520 may increase a size of a resource allocated for cells related to the DU 400 as the number of cells related to the DU 400 increases. The resource management unit 520 may allocate all of resources included in the CPU resource pool based on the number of cells related to the DU 400 being the designated number. The resource management unit 520 may maintain a state in which all of resources included in the CPU resource pool are allocated, based on the number of cells related to the DU 400 being greater than the designated number.

For example, an unused portion (or an unallocated portion) among the CPU resource pool may be set to an idle state. The resource management unit 520 (or the DU 400) may set the unused portion (or the unallocated portion) among the CPU resource pool to the idle state. Power of the unused portion (or the unallocated portion) among the CPU resource pool may be cut off or limited. Based on power of the unused portion (or the unallocated portion) among the CPU resource pool being cut off or limited, power consumption may be reduced.

According to an embodiment, at least one cell may be removed from the DU 400. The resource management unit 520 (or the DU 400) may set the first portion and the second portion of the CPU resource pool to the idle state, based on at least one cell being removed. The resource management unit 520 may set, to the idle state, the first portion and the second portion of the CPU resource pool, which was allocated for the first application and the second application, based on at least one cell being removed.

According to an embodiment, a network node (e.g., DU) may comprise at least one processor comprising processing circuitry, and memory, comprising one and more storage media, storing instructions. The instructions, when executed by the at least one processor individually or collectively, may cause the network node to obtain a first message including information on first amount of central processing unit (CPU) resource for one or more physical (PHY) functions for at least one cell related to the network node, from a first application for providing the one or more PHY functions and a second message including information on second amount of CPU resource for one or more medium access control (MAC) functions for the at least one cell, from a second application for providing the one or more MAC functions. The instructions, when executed by the at least one processor individually or collectively, may cause the network node to allocate, based on the first message and the second message, a first portion of a CPU resource pool corresponding to the first amount of CPU resource and a second portion of the CPU resource pool corresponding to the second amount of CPU resource. The first portion of the CPU resource pool may be used for performing the one or more PHY functions for the at least one cell. The second portion of the CPU resource pool may be used for performing the one or more MAC functions for the at least one cell.

According to an embodiment, the CPU resource pool may be configured based on the number of a plurality of cores available for the network node.

According to an embodiment, the information on the first amount of CPU resource may include information on a first number of cores for performing the one or more PHY functions among the plurality of cores. The information on the second amount of CPU resource may include information on a second number of cores for performing the one or more MAC functions among the plurality of cores.

According to an embodiment, the first number of cores for performing the one or more PHY functions may be obtained based on at least one of information on a communication mode for the at least one cell, radio resource information for the at least one cell, or user information. The second number of cores for performing the one or more MAC functions may be obtained based on at least one of the information on the communication mode for the at least one cell, the radio resource information for the at least one cell, or the user information.

According to an embodiment, the first portion of the CPU resource pool may be allocated based on the first number of cores. The second portion of the CPU resource pool may be allocated based on the second number of cores.

According to an embodiment, the instructions, when executed by the at least one processor individually or collectively, may cause the network node to determine, based on the number of the at least one cell, a size of the first portion of the CPU resource pool and a size of the second portion of the CPU resource pool.

According to an embodiment, the instructions, when executed by the at least one processor individually or collectively, may cause the network node to allocate all of the CPU resource pool based on that the number of the at least one cell is greater than or equal to a designated number.

According to an embodiment, the instructions, when executed by the at least one processor individually or collectively, may cause the network node to set an unused portion of the CPU resource pool to an idle state.

According to an embodiment, the instructions, when executed by the at least one processor individually or collectively, may cause the network node to set the first portion and the second portion of the CPU resource pool to the idle state, based on the at least one cell being removed.

According to an embodiment, the first message and the second message may be obtained based on an inter-process communication (IPC) interface.

According to an embodiment, a method performed by a network node (e.g., DU) may comprise obtaining a first message including information on first amount of central processing unit (CPU) resource for one or more physical (PHY) functions for at least one cell related to the network node, from a first application for providing the one or more PHY functions and a second message including information on second amount of CPU resource for one or more medium access control (MAC) functions for the at least one cell, from a second application for providing the one or more MAC functions. The method may comprise allocating, based on the first message and the second message, a first portion of a CPU resource pool corresponding to the first amount of CPU resource and a second portion of the CPU resource pool corresponding to the second amount of CPU resource. The first portion of the CPU resource pool may be used for performing the one or more PHY functions for the at least one cell. The second portion of the CPU resource pool may be used for performing the one or more MAC functions for the at least one cell.

According to an embodiment, the CPU resource pool may be configured based on the number of a plurality of cores available for the network node.

According to an embodiment, the information on the first amount of CPU resource may include information on a first number of cores for performing the one or more PHY functions among the plurality of cores. The information on the second amount of CPU resource may include information on a second number of cores for performing the one or more MAC functions among the plurality of cores.

According to an embodiment, the first number of cores for performing the one or more PHY functions may be obtained based on at least one of information on a communication mode for the at least one cell, radio resource information for the at least one cell, or user information. The second number of cores for performing the one or more MAC functions may be obtained based on at least one of the information on the communication mode for the at least one cell, the radio resource information for the at least one cell, or the user information.

According to an embodiment, a non-transitory computer readable storage medium may store one or more programs. The one or more programs may comprise instructions, which, when being executed by at least one processor of a network node (e.g., DU), cause the network node to obtain a first message including information on first amount of central processing unit (CPU) resource for one or more physical (PHY) functions for at least one cell related to the network node, from a first application for providing the one or more PHY functions and a second message including information on second amount of CPU resource for one or more medium access control (MAC) functions for the at least one cell, from a second application for providing the one or more MAC functions. The one or more programs may comprise instructions, which, when being executed by the at least one processor, cause the network node to allocate, based on the first message and the second message, a first portion of a CPU resource pool corresponding to the first amount of CPU resource and a second portion of the CPU resource pool corresponding to the second amount of CPU resource. The first portion of the CPU resource pool may be used for performing the one or more PHY functions for the at least one cell. The second portion of the CPU resource pool may be used for performing the one or more MAC functions for the at least one cell.

According to an embodiment, an electronic device for a distributed unit (DU) may comprise at least one processor, and memory storing instructions. The instructions, when executed by the at least one processor, may cause the electronic device to obtain a first message including information on first amount of central processing unit (CPU) resource for one or more physical (PHY) functions for at least one cell related to the DU, from a first application for providing the one or more PHY functions and a second message including information on second amount of CPU resource for one or more medium access control (MAC) functions for the at least one cell, from a second application for providing the one or more MAC functions. The instructions, when executed by the at least one processor, may cause the electronic device to allocate, based on the first message and the second message, a first portion of a CPU resource pool corresponding to the first amount of CPU resource and a second portion of the CPU resource pool corresponding to the second amount of CPU resource. The first portion of the CPU resource pool may be used for performing the one or more PHY functions for the at least one cell. The second portion of the CPU resource pool may be used for performing the one or more MAC functions for the at least one cell.

For example, the CPU resource pool may be configured based on the number of a plurality of cores available for the DU.

For example, the information on the first amount of CPU resource may include information on a first number of cores for performing the one or more PHY functions among the plurality of cores. The information on the second amount of CPU resource may include information on a second number of cores for performing the one or more MAC functions among the plurality of cores.

For example, the first number of cores for performing the one or more PHY functions may be obtained based on at least one of information on a communication mode for the at least one cell, radio resource information for the at least one cell, or user information. The second number of cores for performing the one or more MAC functions may be obtained based on at least one of the information on the communication mode for the at least one cell, the radio resource information for the at least one cell, or the user information.

For example, the first portion of the CPU resource pool may be allocated based on the first number of cores. The second portion of the CPU resource pool may be allocated based on the second number of cores.

For example, the instructions, when executed by the at least one processor, may cause the electronic device to determine, based on the number of the at least one cell, a size of the first portion of the CPU resource pool and a size of the second portion of the CPU resource pool.

For example, the instructions, when executed by the at least one processor, may cause the electronic device to allocate all of the CPU resource pool based on that the number of the at least one cell is greater than or equal to a designated number.

For example, the instructions, when executed by the at least one processor, may cause the electronic device to set an unused portion of the CPU resource pool to an idle state.

For example, the instructions, when executed by the at least one processor, may cause the electronic device to set the first portion and the second portion of the CPU resource pool to the idle state, based on the at least one cell being removed.

For example, the first message and the second message may be obtained based on an inter-process communication (IPC) interface.

According to an embodiment, a method performed by distributed unit (DU) may comprise obtaining a first message including information on first amount of central processing unit (CPU) resource for one or more physical (PHY) functions for at least one cell related to the DU, from a first application for providing the one or more PHY functions and a second message including information on second amount of CPU resource for one or more medium access control (MAC) functions for the at least one cell, from a second application for providing the one or more MAC functions. The method may comprise allocating, based on the first message and the second message, a first portion of a CPU resource pool corresponding to the first amount of CPU resource and a second portion of the CPU resource pool corresponding to the second amount of CPU resource. The first portion of the CPU resource pool may be used for performing the one or more PHY functions for the at least one cell. The second portion of the CPU resource pool may be used for performing the one or more MAC functions for the at least one cell.

For example, the CPU resource pool may be configured based on the number of a plurality of cores available for the DU.

For example, the information on the first amount of CPU resource may include information on a first number of cores for performing the one or more PHY functions among the plurality of cores. The information on the second amount of CPU resource may include information on a second number of cores for performing the one or more MAC functions among the plurality of cores.

For example, the first number of cores for performing the one or more PHY functions may be obtained based on at least one of information on a communication mode for the at least one cell, radio resource information for the at least one cell, or user information. The second number of cores for performing the one or more MAC functions may be obtained based on at least one of the information on the communication mode for the at least one cell, the radio resource information for the at least one cell, or the user information.

For example, the first portion of the CPU resource pool may be allocated based on the first number of cores. The second portion of the CPU resource pool may be allocated based on the second number of cores.

For example, the method may comprise determining, based on the number of the at least one cell, a size of the first portion of the CPU resource pool and a size of the second portion of the CPU resource pool.

For example, the method may comprise allocating all of the CPU resource pool based on that the number of the at least one cell is greater than or equal to a designated number.

For example, the method may comprise setting an unused portion of the CPU resource pool to an idle state.

For example, the method may comprise setting the first portion and the second portion of the CPU resource pool to the idle state, based on the at least one cell being removed.

According to an embodiment, a non-transitory computer readable storage medium may store one or more programs. The one or more programs may comprise instructions, which, when being executed by at least one processor of an electronic device for a distributed unit (DU), cause the electronic device to obtain a first message including information on first amount of central processing unit (CPU) resource for one or more physical (PHY) functions for at least one cell related to the DU, from a first application for providing the one or more PHY functions and a second message including information on second amount of CPU resource for one or more medium access control (MAC) functions for the at least one cell, from a second application for providing the one or more MAC functions. The one or more programs may comprise instructions, which, when being executed by the at least one processor of the electronic device, cause the electronic device to allocate, based on the first message and the second message, a first portion of a CPU resource pool corresponding to the first amount of CPU resource and a second portion of the CPU resource pool corresponding to the second amount of CPU resource. The first portion of the CPU resource pool may be used for performing the one or more PHY functions for the at least one cell. The second portion of the CPU resource pool may be used for performing the one or more MAC functions for the at least one cell.

According to the above-described embodiments, there is an effect in which operational convenience is increased, and development cost is reduced, as a system type or a system configuration (or flavor) is reduced. According to the above-described embodiments, there is an effect in which consumed power is reduced by increasing efficiency of resource use. According to the above-described embodiments, a system configuration according to different resource allocation may be reduced by dynamically allocating CPU resources of a system supporting FDD and TDD simultaneously. Operational convenience of a system may be improved, and a test environment for product verification may be simplified. Accordingly, resources for environment construction and verification for a system (e.g., human resources or material resources) may be reduced. In addition, as consumed power is reduced, there is an effect in which operational cost may be reduced.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

It should be appreciated that embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

**Claims**

1.  A network node, comprising:

    at least one processor comprising processing circuitry; and
    memory, comprising one and more storage media, storing instructions, wherein the instructions, when executed by the at least one processor individually or collectively, cause the network node to :

    obtain a first message including information on first amount of central processing unit (CPU) resource for one or more physical (PHY) functions for at least one cell related to the network node, from a first application for providing the one or more PHY functions and a second message including information on second amount of CPU resource for one or more medium access control (MAC) functions for the at least one cell, from a second application for providing the one or more MAC functions, and
    allocate, based on the first message and the second message, a first portion of a CPU resource pool corresponding to the first amount of CPU resource and a second portion of the CPU resource pool corresponding to the second amount of CPU resource,
    wherein the first portion of the CPU resource pool is used for performing the one or more PHY functions for the at least one cell, and
    wherein the second portion of the CPU resource pool is used for performing the one or more MAC functions for the at least one cell.

2.  The network node of claim 1, wherein the CPU resource pool is configured based on the number of a plurality of cores available for the network node.

3.  The network node of claim 2, wherein the information on the first amount of CPU resource includes information on a first number of cores for performing the one or more PHY functions among the plurality of cores, and
    wherein the information on the second amount of CPU resource includes information on a second number of cores for performing the one or more MAC functions among the plurality of cores.

4.  The network node of claim 3, wherein the first number of cores for performing the one or more PHY functions are obtained based on at least one of information on a communication mode for the at least one cell, radio resource information for the at least one cell, or user information, and
    wherein the second number of cores for performing the one or more MAC functions are obtained based on at least one of the information on the communication mode for the at least one cell, the radio resource information for the at least one cell, or the user information.

5. The network node of claim 4, wherein the first portion of the CPU resource pool is allocated based on the first number of cores, and
wherein the second portion of the CPU resource pool is allocated based on the second number of cores.

6. The network node of claim 1, wherein the instructions, when executed by the at least one processor individually or collectively, cause the network node to determine, based on the number of the at least one cell, a size of the first portion of the CPU resource pool and a size of the second portion of the CPU resource pool.

7. The network node of claim 6, wherein the instructions, when executed by the at least one processor individually or collectively, cause the network node to allocate all of the CPU resource pool based on that the number of the at least one cell is greater than or equal to a designated number.

8. The network node of claim 1, wherein the instructions, when executed by the at least one processor individually or collectively, cause the network node to set an unused portion of the CPU resource pool to an idle state.

9. The network node of claim 8, wherein the instructions, when executed by the at least one processor individually or collectively, cause the network node to set the first portion and the second portion of the CPU resource pool to the idle state, based on the at least one cell being removed.

10. The network node of claim 1, wherein the first message and the second message are obtained based on an inter-process communication (IPC) interface.

11. A method performed by a network node, comprising:

obtaining a first message including information on first amount of central processing unit (CPU) resource for one or more physical (PHY) functions for at least one cell related to the network node, from a first application for providing the one or more PHY functions and a second message including information on second amount of CPU resource for one or more medium access control (MAC) functions for the at least one cell, from a second application for providing the one or more MAC functions, and
allocating, based on the first message and the second message, a first portion of a CPU resource pool corresponding to the first amount of CPU resource and a second portion of the CPU resource pool corresponding to the second amount of CPU resource,
wherein the first portion of the CPU resource pool is used for performing the one or more PHY functions for the at least one cell, and
wherein the second portion of the CPU resource pool is used for performing the one or more MAC functions for the at least one cell.

12. The method of claim 11, wherein the CPU resource pool is configured based on the number of a plurality of cores available for the network node.

13. The method of claim 12, wherein the information on the first amount of CPU resource includes information on a first number of cores for performing the one or more PHY functions among the plurality of cores, and
wherein the information on the second amount of CPU resource includes information on a second number of cores for performing the one or more MAC functions among the plurality of cores.

14. The method of claim 13, wherein the first number of cores for performing the one or more PHY functions are obtained based on at least one of information on a communication mode for the at least one cell, radio resource information for the at least one cell, or user information, and
wherein the second number of cores for performing the one or more MAC functions are obtained based on at least one of the information on the communication mode for the at least one cell, the radio resource information for the at least one cell, or the user information.

15. A non-transitory computer readable storage medium storing one or more programs, the one or more programs comprising instructions, which, when being executed by at least one processor of a network node, cause the network node to:

obtain a first message including information on first amount of central processing unit (CPU) resource for one or more physical (PHY) functions for at least one cell related to the network node, from a first application for providing the one or more PHY functions and a second message including information on second amount of CPU resource for one or more medium access control (MAC) functions for the at least one cell, from a second application for providing the one or more MAC functions, and

allocate, based on the first message and the second message, a first portion of a CPU resource pool corresponding to the first amount of CPU resource and a second portion of the CPU resource pool corresponding to the second amount of CPU resource,

wherein the first portion of the CPU resource pool is used for performing the one or more PHY functions for the at least one cell, and

wherein the second portion of the CPU resource pool is used for performing the one or more MAC functions for the at least one cell.

FIG. 1

CELL MANAGER (240)

CU (230)

DU (210)

RU (220)

FIG. 2

FIG. 3A

FIG. 3B

DU (400)

| MODEM PROCESSING UNIT (410) | CONNECTION MANAGEMENT UNIT (420) | SYSTEM MANAGEMENT UNIT (430) |

FIG. 4

410

FIRST
APPLICATION
(511)

SECOND
APPLICATION
(512)

THIRD
APPLICATION
(513)

· · ·

510

RESOURCE MANAGEMENT UNIT (520)

FIG. 5

410

| CONNECTION MANAGEMENT UNIT (420) | MESSAGE FOR CELL SETUP → |

SECOND MESSAGE →
SECOND APPLICATION (512)

INFORMATION ON SECOND PORTION OF CPU RESOURCE POOL

REQUEST MESSAGE

CELL SETUP CONFIGURATION MESSAGE

RESOURCE MANAGEMENT UNIT (520)

FIRST APPLICATION (511)

FIRST MESSAGE →

INFORMATION ON FIRST PORTION OF CPU RESOURCE POOL

FIG. 6

700

| FIRST APPLICATION 46% | SECOND APPLICATION 29% | OTHER 25% |

710 720 730

FIG. 7A

700

x% 760
y% 770
75% -x -y 790
OTHER 25% 780

FIG. 7B

FIG. 8A

FIG. 8B

FIG. 8C

OBTAIN FIRST MESSAGE FROM FIRST APPLICATION
AND SECOND MESSAGE FROM SECOND APPLICATION — 910

ALLOCATE FIRST PORTION OF CPU RESOURCE POOL
AND SECOND PORTION OF CPU RESOURCE POOL — 920

FIG. 9

## INTERNATIONAL SEARCH REPORT

| International application No. |
|---|
| **PCT/KR2024/008099** |

| A. | CLASSIFICATION OF SUBJECT MATTER |
|---|---|

**H04W 72/29**(2023.01)i; **G06F 9/50**(2006.01)i; **H04W 74/04**(2009.01)i; **H04W 88/08**(2009.01)i; **H04W 72/04**(2009.01)i; **H04W 24/02**(2009.01)i

According to International Patent Classification (IPC) or to both national classification and IPC

| B. | FIELDS SEARCHED |
|---|---|

Minimum documentation searched (classification system followed by classification symbols)

H04W 72/29(2023.01); G06F 9/455(2006.01); G06F 9/50(2006.01); H04B 1/00(2006.01); H04B 7/04(2006.01); H04B 7/0413(2017.01); H04L 29/06(2006.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CPU(central processing unit), 자원 양(resource amount), 자원 풀(resource pool), PHY(physical), MAC(medium access control)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2019-0272187 A1 (THE TRUSTEES OF THE UNIVERSITY OF PENNSYLVANIA) 05 September 2019 (2019-09-05) See paragraph [0024] and claims 15 and 21. | 1,2,8,10-12,15 |
| A | | 3-7,9,13,14 |
| Y | US 2019-0320487 A1 (PHAZR, INC.) 17 October 2019 (2019-10-17) See paragraph [0039] and claim 1. | 1,2,8,10-12,15 |
| Y | US 2020-0044670 A1 (COMMSCOPE TECHNOLOGIES LLC) 06 February 2020 (2020-02-06) See claims 1 and 2. | 2,12 |
| A | US 2022-0291961 A1 (SAANKHYA LABS PRIVATE LIMITED) 15 September 2022 (2022-09-15) See paragraphs [0017]-[0042]. | 1-15 |

| ✓ | Further documents are listed in the continuation of Box C. | | ✓ | See patent family annex. |
|---|---|---|---|---|

| | | | | |
|---|---|---|---|---|
| * | Special categories of cited documents: | | "T" | later document published after the international filing date or priority date and not in conflict with the application but cited to understand the principle or theory underlying the invention |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| **20 September 2024** | **20 September 2024** |

| Name and mailing address of the ISA/KR | Authorized officer |
|---|---|
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/008099**

### C.    DOCUMENTS CONSIDERED TO BE RELEVANT

| Category* | Citation of document, with indication, where appropriate, of the relevant passages | Relevant to claim No. |
|---|---|---|
| A | KR 10-2020-0070933 A (KT CORPORATION) 18 June 2020 (2020-06-18) See paragraphs [0041]-[0086]. | 1-15 |

Form PCT/ISA/210 (second sheet) (July 2022)

**INTERNATIONAL SEARCH REPORT**
Information on patent family members

International application No.

**PCT/KR2024/008099**

| Patent document cited in search report | | | Publication date (day/month/year) | Patent family member(s) | | | Publication date (day/month/year) |
|---|---|---|---|---|---|---|---|
| US | 2019-0272187 | A1 | 05 September 2019 | US | 10223139 | B2 | 05 March 2019 |
| | | | | US | 11429407 | B2 | 30 August 2022 |
| | | | | US | 2014-0282544 | A1 | 18 September 2014 |
| | | | | US | 2023-0221978 | A1 | 13 July 2023 |
| US | 2019-0320487 | A1 | 17 October 2019 | US | 10701755 | B2 | 30 June 2020 |
| US | 2020-0044670 | A1 | 06 February 2020 | CN | 112438039 | A | 02 March 2021 |
| | | | | EP | 3794786 | A1 | 24 March 2021 |
| | | | | EP | 3794786 | A4 | 02 March 2022 |
| | | | | US | 10797734 | B2 | 06 October 2020 |
| | | | | WO | 2020-027899 | A1 | 06 February 2020 |
| US | 2022-0291961 | A1 | 15 September 2022 | None | | | |
| KR | 10-2020-0070933 | A | 18 June 2020 | None | | | |

Form PCT/ISA/210 (patent family annex) (July 2022)